Europäisches Patentamt

**European Patent Office**

**Office européen des brevets**

(11) Numéro de publication: **0 287 172 B1**

(12) **FASCICULE DE BREVET EUROPEEN**

(45) Date de publication de fascicule du brevet: **29.07.92** (51) Int. Cl.⁵: $H04N\ 5/335$, $H04N\ 7/01$

(21) Numéro de dépôt: **88200694.3**

(22) Date de dépôt: **11.04.88**

(54) **Dispositif pour assurer la compatibilité télévision de senseurs d'image à analyse optico-mécanique.**

(30) Priorité: **17.04.87 FR 8705527**

(43) Date de publication de la demande:
**19.10.88 Bulletin 88/42**

(45) Mention de la délivrance du brevet:
**29.07.92 Bulletin 92/31**

(84) Etats contractants désignés:
**DE FR GB IT SE**

(56) Documents cités:
**EP-A- 0 212 784**
**US-A- 3 947 826**
**US-A- 3 978 281**
**US-A- 4 358 789**

(73) Titulaire: **TELECOMMUNICATIONS RADIOE-
LECTRIOUES ET TELEPHONIOUES T.R.T.
88, rue Brillat Savarin
F-75013 Paris(FR)**

(84) Etats contractants désignés:
**FR**

(73) Titulaire: **N.V. Philips' Gloeilampenfabrieken
Groenewoudseweg 1
NL-5621 BA Eindhoven(NL)**

(84) Etats contractants désignés:
**DE GB IT SE**

(72) Inventeur: **Rotival, Jacques Société Civile
S.P.I.D.
209, rue de l'Université
F-75007 Paris(FR)**

(74) Mandataire: **Pyronnet, Jacques et al
Société Civile S.P.I.D. 156, Boulevard Haussmann
F-75008 Paris(FR)**

Rank Xerox (UK) Business Services

## Description

L'invention concerne un dispositif pour assurer la compatibilité télévision de senseurs d'image à analyse optico-mécanique, ladite analyse étant effectuée par l'analyseur d'une caméra utilisant un balayage série ou parallèle-série d'un champ d'observation, comportant d'une part un dispositif de numérisation qui fournit en série sous forme numérique des échantillons représentatifs des points du champ d'observation analysé dans l'ordre chronologique, chaque point échantillon étant codé sur p bits en parallèle et un convertisseur numérique-analogique, d'autre part des moyens de visualisation sur un moniteur de télévision (moniteur TV) du signal de sortie dudit convertisseur numérique analogique.

Les senseurs d'image à analyse optico-mécanique auxquels s'applique l'invention comportent des éléments optiques mobiles tels que des miroirs oscillants ou des tambours de miroirs tournants qui sont caractérisés par une vitesse élevée de fonctionnement en balayage trame et ligne et par une inertie associée non négligeable, ce qui empêche de les asservir en position. Pour reproduire l'image ainsi analysée d'un champ de vision, on utilise couramment un moniteur TV dont les cadences, c'est-à-dire les fréquences de balayage trame et ligne sont fournies par l'analyseur lui-même. Deux inconvénients résultent de cette façon d'opérer :

En premier lieu, les imperfections dans la saisie de l'image, qui sont dues aux balayages mécaniques, ces derniers ayant intrinsèquement des temps de réponse lents, sont intégralement retransmises sur l'écran du moniteur TV ; il s'agit notamment d'un vacillement sur la synchronisation de ligne, de contractions ou de dilatations de l'image dues à des accélérations angulaires de la caméra. D'autre part, il est souhaitable, surtout pour des questions de normalisation, de pouvoir fournir un signal d'image à un standard TV strict, tel par exemple le standard TV CCIR, en lieu et place d'un signal TV dont le standard est étroitement lié à tel ou tel type d'analyse optico-mécanique, et pour lequel les cadences de ligne, notamment, ne sont pas aux standards TV. La suppression simultanée des deux inconvénients précités constitue un problème technique que se propose de résoudre l'invention qui vise donc à restituer sur un écran TV une image améliorée et qui réponde à un standard TV.

L'invention s'applique à des caméras à balayage série ou parallèle-série, à l'exclusion des caméras à balayage parallèle, le mode de balayage préféré étant d'ailleurs le balayage parallèle-série qui, comparé au balayage série permet, à balayages image ou trame identiques, de diviser par m la vitesse du dispositif de balayage ligne, ce qui diminue les problèmes de synchronisation de ligne et permet l'utilisation de photodétecteurs moins rapides, moyennant un nombre m fois plus élevé de ces photodétecteurs. Dans le cas d'un balayage parallèle-série, les signaux analogiques de sortie de la caméra sont distribués en parallèle sur m conducteurs et il est alors connu et même classique de placer juste en aval de la caméra un dispositif de numérisation qui a aussi pour fonction d'effectuer une conversion de balayage, c'est-à-dire une conversion sous forme série des lignes de l'image selon une succession chronologique qui correspond à la succession spatiale des lignes du champ d'observation. On se ramène ainsi à un balayage série des lignes, les points eux-mêmes étant analysés en série dans chaque ligne. Que le balayage soit effectué sous forme série ou parallèle-série, on obtient donc en sortie du dispositif de numérisation une succession d'échantillons numériques sous forme série, chaque échantillon étant représentatif d'un point, codé en parallèle sur p bits. On notera à ce sujet que le nombre m n'intervient pas pour la mise en oeuvre de l'invention ni l'optimisation de ses modes de réalisation, tout se passant comme si le dispositif de numérisation était intégré à la caméra et qu'on ait affaire dans tous les cas à un balayage série. Selon la technique connue, les signaux de sortie de l'organe de numérisation peuvent être fournis au moniteur TV après conversion réalisée par un convertisseur numérique-analogique et éventuellement par l'intermédiaire d'un module de traitement numérique dans lequel peuvent être effectués différents types de filtrage ou des traitements tels que concaténation, convolution ou élimination du fond du paysage. Selon cette technique, les défauts précités sur l'image du moniteur TV subsistent, le vacillement sur la synchronisation de ligne notamment qui est dû à des erreurs de gravure et de seuillage dans le capteur de l'analyseur ligne et à des parasites divers tels que des perturbations électriques ou mécaniques, des poussières ou autres. D'autre part, le nombre total de lignes par image est généralement égal à un multiple k de m dans le cas d'une analyse en bandes de m lignes, par exemple : k x m = 57 x 11 = 627 lignes ; enfin, les synchronisations de ligne et de trame sont imparfaites en raison des mouvements induits par le porteur de la caméra. Les imperfections mentionnées ci-dessus ne sont pas corrigeables pour des raisons de principe ou à cause de limitations technologiques.

Une façon d'opérer connue consiste à imposer à l'analyseur une fréquence d'image identique à celle du récepteur TV utilisé, au standard de ce dernier. Cette façon d'opérer est connue par exemple du brevet GB 1 482 789 mais dans un domaine technique différent de celui de l'invention, pour une caméra à analyse parallèle, c'est-à-dire un domaine dans lequel la synchronisation de ligne ne se pose pas. On notera d'ailleurs que dans cette technique connue, il est indispensable de disposer d'une mémoire dont la capacité est supérieure ou égale à une trame pour assurer la conversion de standard recherchée, soit plusieurs centaines de lignes, ce qui est, dans l'état actuel de la technologie, encombrant et cher et introduit un retard important entre l'analyse et la visualisation.

Un but de l'invention est d'assurer la compatibilité télévision stricte de senseurs d'image à analyse optico-mécanique parallèle-série ou série.

Un autre but de l'invention est d'améliorer la stabilité de l'image restituée sur l'écran d'un moniteur TV à l'occasion d'une conversion de standard entre un analyseur optico-mécanique et un moniteur TV à un standard TV.

Ces buts sont atteints et les inconvénients de l'art antérieur sont atténués ou supprimés grâce au fait que le dispositif défini en préambule est remarquable en ce qu'il comporte en outre en combinaison d'une part entre ledit dispositif de numérisation et ledit convertisseur numérique-analogique une mémoire de lignes comportant au moins N lignes, N étant un nombre entier, et conçue pour recevoir des points de l'image du champ d'observation à une première cadence de lignes d'analyse optico-mécanique et pour fournir ces points audit moniteur TV à une deuxième cadence de lignes TV quelles que soient les fluctuations, variables dans le temps, entre ces cadences respectives, fluctuations telles que le décalage instantané entre l'analyse et la restitution sur le moniteur TV varie au maximum de N lignes, et d'autre part un générateur d'horloge d'image qui fournit d'une part audit analyseur et à ladite mémoire de lignes des signaux de synchronisation d'image de même fréquence, d'autre part à ladite mémoire de lignes des signaux de synchronisation de ligne et de point à un standard TV.

L'idée de base de l'invention est de briser les liaison rigides qui lient la sortie du convertisseur numérique-analogique à l'analyseur. Le module de conversion de balayage ne doit donc pas se limiter au seul dispositif de numérisation mais comporter deux blocs :

- un bloc d'entrée, constitué par le dispositif de numérisation proprement dit, qui acquiert la vidéo en synchronisme avec l'analyse,
- un bloc de sortie émettant cette même vidéo en synchronisme avec une base de temps strictement TV, par exemple compatible CCIR.

Ces deux bases de temps présentent des fluctuations temporelles l'une par rapport à l'autre ; il est alors nécessaire de disposer d'un système supplémentaire, en l'occurrence d'une mémoire de lignes (mémoire tampon) de capacité adéquate et judicieusement adressée permettant à la vidéo de suivre les mêmes fluctuations dont la moyenne doit être nulle à long terme. Deux modes de réalisation sont décrits ci-dessous, qui visent à optimiser cette mémoire de lignes en coût, en volume et/ou en temps de retard, c'est-à-dire à minimiser la capacité ou l'adressage de cette mémoire en utilisant autant que possible des mémoires bon marché, largement diffusées dans le commerce, de préférence des mémoires à adressage à accès aléatoire (RAM).

Une telle mémoire pourraît être réalisée au moyen de composants du type premier entré-premier sorti (FIFO) du commerce mais la capacité requise, bien que faible et réduite à quelques dizaines de lignes, conduit à un grand nombre de ces composants coûteux. Les solutions proposées permettent au contraire l'utilisation de mémoires RAM très répandues sur le marché.

Un premier mode de réalisation du dispositif selon l'invention est remarquable en ce que ladite mémoire de lignes est constituée de 3 blocs mémoire à accès aléatoire (RAM) de N lignes chacun, et qu'il comporte en outre pour l'adressage de ladite mémoire RAM des compteurs de lignes et de points d'analyse, et un compteur de N lignes d'analyse relié à un premier décodeur d'analyse, des compteurs de lignes et de points d'image TV, et un compteur de N lignes TV relié à un deuxième décodeur TV, un circuit logique pour fournir, à partir desdits premier et deuxième décodeurs des signaux de commande d'écriture-lecture et de sélection de circuit auxdits blocs de mémoire de ligne, et des multiplexeurs commandés par lesdits si-gnaux d'écriture-lecture pour transmettre auxdits blocs les adresses constituées par les signaux de sortie d'au moins lesdits compteurs de ligne.

L'option choisie dans ce cas est de lire ou d'inscrire tel ou tel bloc à un instant donné, la possibilité d'inscription et de lecture simultanée de plusieurs lignes dans un même bloc étant exclue. Dans ces conditions, on est amené à considérer que la mise à disposition de 2 blocs de N lignes chacun est insuffisante, mais que 3 blocs de N lignes conviennent pour constituer la mémoire de lignes.

Un deuxième mode de réalisation du dispositif est remarquable en ce qu'il comporte une mémoire de lignes à accès aléatoire (RAM) réduite à N lignes et distribuée sous forme de p blocs, un registre d'entrée de points d'analyse constitué par p convertisseurs série-parallèle, à raison d'un convertisseur par bit de point d'analyse, dont la capacité est égale à q bits, q étant une puissance de deux, un registre de sortie de points au standard TV constitué par p convertisseurs parallèle-série ayant chacun une capacité de q bits, un bloc mémoire dont la capacité comptée en nombre de lignes est égale à N/p étant raccordé à chaque registre d'entrée et de sortie, un compteur de points d'analyse, respectivement de points TV et un compteur de lignes d'analyse, respectivement de lignes TV, lesdits compteurs fournissant à leur sortie multiple, par l'intermédiaire d'un multiplexeur, les signaux d'adresse d'écriture, respectivement de lecture à chacun des p blocs mémoires, et un générateur d'horloges de base qui fournit auxdits registres, blocs-mémoires, multiplexeurs et compteur de lignes les signaux de commande adéquats.

Dans ce deuxième mode de réalisation, l'inscription et la lecture alternées d'un seul bloc de mémoire RAM de N lignes sont rendues possibles, à l'échelle d'une période de ligne, ce qui permet de diviser par 3 la capacité de la mémoire par rapport au premier mode de réalisation.

De préférence, les cadences de points en sortie du dispositif de numérisation $F_{pA}$, en entrée du moniteur TV $F_{pTV}$, et en entrée et sortie de la mémoire de lignes sont égales, pour les deux modes de réalisation précités, à la cadence des points TV, pour simplifier le dispositif. Ceci est rendu possible grâce au degré de liberté que permet le dispositif de numérisation, le rendement temporel du balayage ligne TV étant inférieur à 100 % (par exemple 52 $\mu$s pour 64 $\mu$s).

La description qui suit en regard des dessins annexés, le tout donné à titre d'exemple, fera bien comprendre comment l'invention peut être réalisée.

La figure 1 est un schéma synoptique général permettant d'expliciter les principes de base de l'invention.

La figure 2 est le schéma synoptique d'un premier mode de réalisation de la mémoire de lignes du dispositif selon l'invention.

La figure 3 représente des diagrammes de temps montrant l'engendrement des signaux de commande des 3 blocs de mémoire de ligne dans le premier mode de réalisation de la figure 2.

La figure 4 représente des diagrammes de temps montrant comment s'effectuent les synchronisations d'image et de ligne selon le premier mode de réalisation de la figure 2.

La figure 5 est le schéma synoptique d'un deuxième mode de réalisation de la mémoire de lignes du dispositif selon l'invention.

La figure 6 représente des diagrammes de temps montrant l'engendrement et l'action des signaux de commande de la mémoire de lignes à N lignes dans le deuxième mode de réalisation de la figure 5.

La figure 7 représente des diagrammes de temps, analogues à ceux de la figure 4 pour le deuxième mode de réalisation de la figure 5.

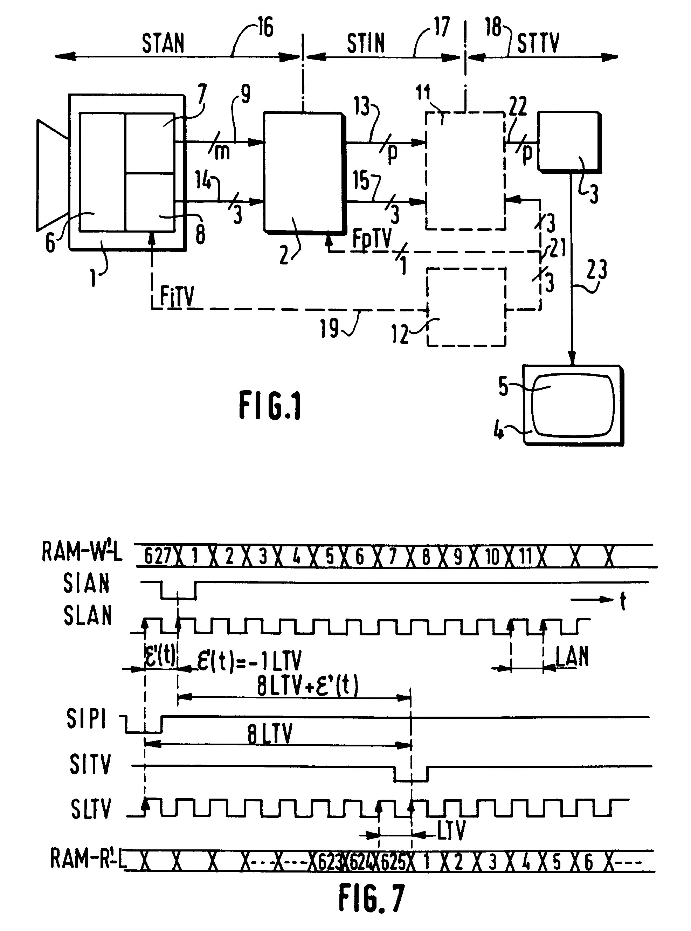

Un système à analyse optico-mécanique d'un champ d'observation avec restitution de l'image du champ sur un écran de télévision tel que représenté à la figure 1 comporte en cascade au moins les éléments suivants : une caméra 1, un convertisseur de balayage limité à un dispositif de numérisation 2 qui contient lui-même un convertisseur analogique-numérique et des mémoires, un convertisseur numérique-analogique 3 et un moniteur TV 4 muni d'un écran 5.

La caméra 1 comporte un module de balayage 6, une unité détectrice 7 et un circuit électronique de balayage 8, l'ensemble des éléments 6, 7 et 8 constituant un analyseur. Le module de balayage est lui-même précédé d'un objectif non représenté et comporte, pour l'essentiel un élément optique de balayage trame, par exemple par deux trames entrelacées et un élément optique de balayage ligne. L'analyse peut être effectuée soit ligne par ligne, auquel cas le signal vidéo analogique en sortie de la caméra 1 est porté par un conducteur 9 unique, ou par bandes de m lignes et dans ce dernier cas, le conducteur 9, multiple, comporte m conducteurs simples. La caméra fonctionne selon un standard qui lui est propre, correspondant à un sous standard de télévision, caractérisé par des fréquences d'image $F_{iA}$, de ligne $F_{lA}$. Pour fixer les idées on se donne par exemple les valeurs suivantes :

| | |
|---|---|
| $F_{iA}$ = | 25 Hz |
| $F_{lA}$ = | 15675 Hz soit 627 temps de ligne par image parmi lesquels 510 temps de lignes consécutifs coïncident avec l'analyse de 510 lignes utiles. |
| $F_{pA}$ = | 15 MHz soit 957 temps de point par ligne parmi lesquels 780 temps de points consécutifs coïncident avec 780 points utiles. |

Le moniteur TV 4 fonctionne quant-à lui selon un standard TV caractérisé par des fréquences d'image $F_{iTV}$, de ligne $F_{lTV}$, et de points $F_{pTV}$. Il s'agit par exemple du standard TV CCIR à deux trames entrelacées, à une fréquence de trame de 50 Hz, soit une fréquence d'image : $F_{iTV}$ = 25 Hz.

Les autres fréquences à considérer sont comme suit :

| | |
|---|---|
| $F_{lTV}$ = | 15625 Hz soit 625 temps de ligne par image parmi lesquels 510 temps de lignes consécutifs coïncident avec l'affichage de 510 lignes utiles. |
| $F_{pTV}$ = | 15 MHz soit 960 temps de points par ligne parmi lesquels 780 temps de points consécutifs coïncident avec l'affichage de 780 points utiles. |

On notera que le débit d'information moyen utile à l'analyse et à la restitution sur l'écran 4 est le même selon l'invention, ce qui constitue une hypothèse de départ implicite pour sa mise en oeuvre. A ce stade, le problème à résoudre est double : en premier lieu, les valeurs des fréquences de trame et de ligne des deux standards sont différentes. De plus, étant donné que les deux fréquences du standard d'analyse sont régies par des organes mécaniques, elle sont toutes deux sujettes à fluctuations par rapport aux deux fréquences homologues du standard TV qui peuvent être considérées comme fixes, en comparaison, ces dernières étant engendrées électroniquement. Par exemple, lors d'une accélération en rotation brutale de la caméra 1, de l'ordre de $1000°/s^2$, un temps d'image d'analyse peut être augmenté ou diminué de 6 temps de ligne soit une variation de la fréquence image $F_{iA}$ de l'ordre de 1 %, la fréquence $F_{IA}$ étant elle aussi modifiée dans des proportions comparables. Selon l'invention, on rend les deux standards compatibles par adjonction, entre le dispositif de numérisation 2 et le convertisseur numérique-analogique 3, d'une mémoire de lignes 11 comportant un nombre entier N de lignes et, d'autre part, d'un générateur d'horloge 12.

Le dispositif de numérisation 2 transforme le signal analogique série ou parallèle qu'il reçoit de la caméra 1 en un signal numérique série, par exemple sur 6 bits (p bits) sur un conducteur multiple 13, ce qui représente 64 niveaux de contraste différents possibles. Ce signal numérique est transmis par le conducteur 13 à la mémoire de lignes 11, à la fréquence de point.

Les synchronisations d'image et de ligne sont représentées, à la figure 1 par le conducteur double 14 entre les éléments 1 et 2 et par le conducteur double 15 entre les éléments 2 et 11. Une flèche 16 en regard du conducteur 14 symbolise la partie du dispositif régie par le standard d'analyse STAN, une flèche 17 en regard du conducteur 15 la partie du dispositif régie par un standard intermédiaire STIN proche du standard d'analyse et une flèche 18, la partie restante du dispositif régie par le standard télévision strict STTV.

Le générateur d'horloge 12 fournit au circuit électronique de balayage 8, par un conducteur 19, des impulsions de synchronisation à fréquence image $F_{iTV}$, le module de balayage étant asservi, ce qui implique : $F_{iA} = F_{iTV}$, et à la mémoire de lignes, par un conducteur triple 21, des impulsions de synchronisation d'image, de ligne et de point aux fréquences respectives $F_{iTV}$, $F_{ITV}$ et $F_{pTV}$. Un déphasage correspondant à quelques temps de ligne ou à quelques dizaines de temps de ligne doit être introduit entre les signaux de pilotage d'image sur les conducteurs 19 et 21, sous la forme d'une avance au pilotage de l'analyseur, destiné à compenser le temps moyen nécessaire à l'effet tampon de la mémoire de ligne 11. La mémoire de lignes 11 fournit, par un conducteur multiple 22 au convertisseur numérique-analogique 3 un signal au standard TV en ce qui concerne ses fréquences de ligne et d'image. A défaut d'un système de télévision numérique, ce signal est ensuite transmis sous forme analogique par un conducteur 23 au moniteur TV 4.

De façon connue en soi, le circuit de balayage électronique 8 est asservi en fréquence à la fréquence image $F_{iA}$ qu'il reçoit, en l'occurrence égale à $F_{iTV}$, avec une certaine erreur dynamique, de façon que le signal de synchronisation d'image sur le conducteur 14 est à une fréquence dont la valeur moyenne est égale à $F_{iTV}$, alors qu'en valeur instantanée on peut noter des déphasages avance ou retard équivalant à plusieurs temps de ligne, soit : ± u temps de ligne au maximum. Ce déphasage aléatoire instantané est dû au temps de réponse élevé de l'asservissement précité, à cause des organes mécaniques qui se trouvent dans cette chaîne d'asservissement. A ce premier déphasage s'ajoute une autre dérive systématique de v temps de lignes due à l'écart de fréquence ligne entre les deux standards STAN et STTV. Pour rendre compatibles les deux standards STAN et STTV, on est ainsi amené à considérer des fluctuations dans le temps, entre les impulsions de synchronisation d'image d'analyse d'une part et TV d'autre part, qui peuvent varier de :

$$2u + v \leq N \text{ temps de ligne} \qquad (1)$$

On définit ainsi la capacité de la mémoire de lignes 11, capacité qui doit être au moins égale à N lignes (N nombre entier).

Il vient par exemple, pour u = 6 et v = 2 : N = 16 lignes. On notera la faible valeur de N comparée à la capacité d'une mémoire trame de 255 lignes.

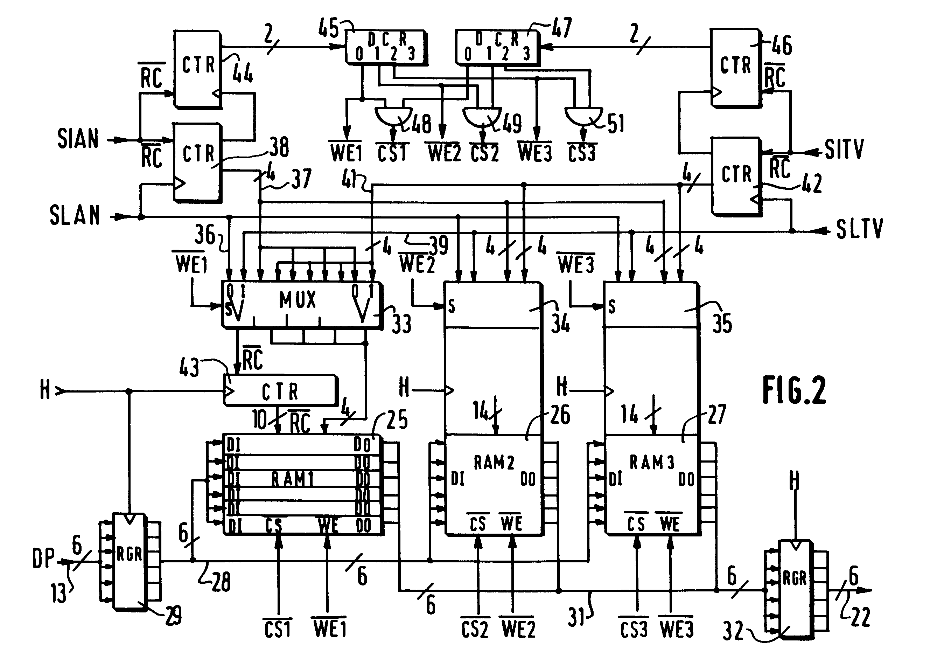

Etant donné que l'analyse est supposée s'effectuer chronologiquement parlant comme la restitution de l'image sur l'écran 5, qu'il s'agisse d'un fonctionnement par trames entrelacées ou d'un fonctionnement image par image, la mémoire 11 à envisager est, quant à son principe général de fonctionnement, du type très simple premier entré-premier sorti (FIFO). On peut d'ailleurs réaliser la mémoire 11 au moyen de composants FIFO du commerce, à raison d'une capacité de N lignes d'image, mais cette capacité requise, bien que faible, conduit à un grand nombre de ces composants coûteux. Les solutions conformes aux deux modes de réalisation décrits ci-dessous en référence aux figures 2 à 7 permettent au contraire l'utilisation de mémoires à accès aléatoire (RAM) très répandues sur le marché, ce qui introduit la nécessité d'un adressage dont la complexité n'est cependant pas rédhibitoire.

Arrivée à ce stade de mise en oeuvre de l'invention dont le principe général a été dégagé ci-dessus, l'idée première est d'inscrire à une première cadence de lignes un bloc de mémoire RAM de N lignes et de lire ce bloc à une deuxième cadence de lignes. Or, l'inscription et la lecture simultanées d'une mémoire RAM sont impossibles, technologiquement parlant. On peut donc être amené à envisager par exemple plusieurs blocs de N lignes tels que pendant qu'un bloc est inscrit, un autre bloc est lu. La mise à disposition de deux blocs de N lignes est encore insuffisante à cause des fluctuations précitées. La mémoire 11 doit donc comporter au moins trois blocs de N lignes dans cette optique. Le raisonnement qui précède peut être généralisé du fait que les blocs mémoire peuvent contenir chacun un nombre de lignes inférieur à N pourvu que leur nombre soit augmenté en conséquence. Le critère de départ d'indépendance entre écriture et lecture de blocs mémoire RAM associé à une fluctuation possible de N lignes entre l'écriture et la lecture conduit à une structure de la mémoire 11 de P blocs de X lignes chacun, tels que :

$$(P-3)X < N \leq (P-2)X \qquad (2)$$

avec :

$x \leq N$

$P \geq 3$

La solution retenue pour le premier mode de réalisation des figures 2, 3, 4, soit : P = 3 et X = N est celle pour laquelle l'adressage des mémoires est le plus simple, la complexité de l'adressage augmentant en même temps que le nombre P de blocs ; c'est aussi celle pour laquelle le compactage de la mémoire de lignes 11 est le meilleur, raison pour laquelle cette solution est choisie de préférence. Cependant, si le premier critère de choix est le prix, au lieu du faible encombrement, il est préférable de choisir des solutions pour lesquelles X<N et P>3. On notera en effet que la capacité de la mémoire décroît lorsque x décroît : par exemple, 4 blocs de 8 lignes ont une capacité totale de 32 lignes alors que 3 blocs de 16 lignes représentent en tout 48 lignes. A la limite, on en arrive à la solution extrême de P = N+2 blocs d'une ligne chacun pour laquelle la capacité de la mémoire 11 est minimale (N+2 lignes) et la gestion de l'adresse peut être considérablement compliquée et qui serait justifiée pour la production du dispositif en grande série seulement et en l'absence de contrainte de volume. Un bon choix résulte en pratique d'un compromis fonction des composants utilisés.

La figure 2 représente la structure d'un premier mode de réalisation de la mémoire de lignes 11 destinée au dispositif selon l'invention. Cette structure se compose pour l'essentiel de trois blocs mémoire RAM identiques, soit le bloc 1,25, le bloc 2,26 et le bloc 3,27. Chaque bloc, d'une capacité au moins égale à 16 lignes est organisé sous la forme de 16 K mots de 6 bits, chaque point étant codé sur 6 bits en parallèle. A cet effet, chaque bloc comporte une entrée de données sextuple DI et une sortie de données sextuple DO ; il est adressé par 14 conducteurs pouvant fournir 16 K adresses différentes, par exemple à raison de 4 conducteurs pour l'adressage des lignes et 10 conducteurs pour l'adressage des points dans chaque ligne. Chaque bloc qui fonctionne par exemple en logique négative comporte en outre une entrée de sélection de circuit $\overline{CS}$ et une entrée d'écriture-lecture $\overline{WE}$. Les mémoires RAM utilisées sont par exemple des mémoires IDT 6167 ayant un temps d'accès de 45 ns. Les entrées de données des trois blocs sont reliées à un bus commun à 6 conducteurs 28 issu d'un registre d'entrée 29 à 6 bits parallèles et, symétriquement, les sorties de données des trois blocs sont reliées à un bus commun à 6 conducteurs 31 qui alimente un registre de sortie 32 à 6 bits parallèles (p = 6). Les registres 29 et 32 reçoivent sur leur entrée d'horloge le signal H de synchronisation des points à la fréquence du standard TV pour les points. L'adressage des lignes s'effectue à partir des signaux de synchronisation ligne et image, soit les signaux SLAN et SIAN en écriture et les signaux SLTV et SITV en lecture. Code les mêmes conducteurs sont utilisés en lecture et en écriture pour les blocs-mémoires 25, 26 et 27, des multiplexeurs 33, 34, 35 respectivement sont utilisés pour aiguiller soit des signaux issus du signal SLAN soit les signaux issus du signal SLTV vers les entrées d'adressage des blocs. Chaque multiplexeur reçoit sur une entrée de sélection S un signal $\overline{WE1}$ - (respectivement $\overline{WE2}$, $\overline{WE3}$) identique au signal $\overline{WE1}$ ($\overline{WE2}$, $\overline{WE3}$) fourni à chaque entrée $\overline{WE}$ de chaque bloc mémoire 25, 26 ou 27. Les entrées de chaque multiplexeur en provenance du signal SLAN, c'est-à-dire les entrées destinées aux adresses d'écriture, sont constituées par une première entrée 36 qui reçoit directement le signal SLAN à la fréquence ligne d'analyse et par une entrée quadruple 37 qui reçoit le signal d'un compteur par 16 (à 4 bits) 38, incrémenté par le signal SLAN et initialisé par les impulsions de synchronisation d'image, c'est-à-dire les impulsions du signal SIAN. De façon symétrique, les entrées du multiplexeur en provenance du signal SLTV, c'est-à-dire les entrées destinées aux adresses de lecture, sont constituées par une première entrée 39 qui reçoit directement le signal SLTV à la fréquence ligne TV et par une entrée quadruple 41 qui reçoit le signal d'un compteur par 16 (à 4 bits) 42, incrémenté par les impulsions du signal SLTV et initialisé par les impulsions du signal SITV. L'adressage des points dans chaque ligne est effectué, pour chaque mémoire, au moyen d'un compteur 43 incrémenté par le signal H à la fréquence des points au standard TV en l'occurrence, qu'il s'agisse de l'écriture ou de la lecture et initialisé soit par le signal SLAN en écriture, soit par le signal SLTV en lecture. Le compteur 43 est à 10 bits, ce qui est suffisant pour compter les points d'une ligne. Les compteurs 43 sont par exemple du type HC 163 appartenant à la famille HCMOS. Cette conception pour l'adressage des points dans chaque ligne permet de réduire à 5 bits de sortie la taille des multiplexeurs 33, 34, 35.

Il est aussi possible à titre de variante de grouper le comptage des points en vue de l'adressage avec les compteurs 38 et 42, ce qui réduirait le nombre de compteurs de points de P à 2 ; par contre la taille des multiplexeurs se-rait augmentée, passant de 5 à 14 bits de sortie dans l'exemple de la figure 2.

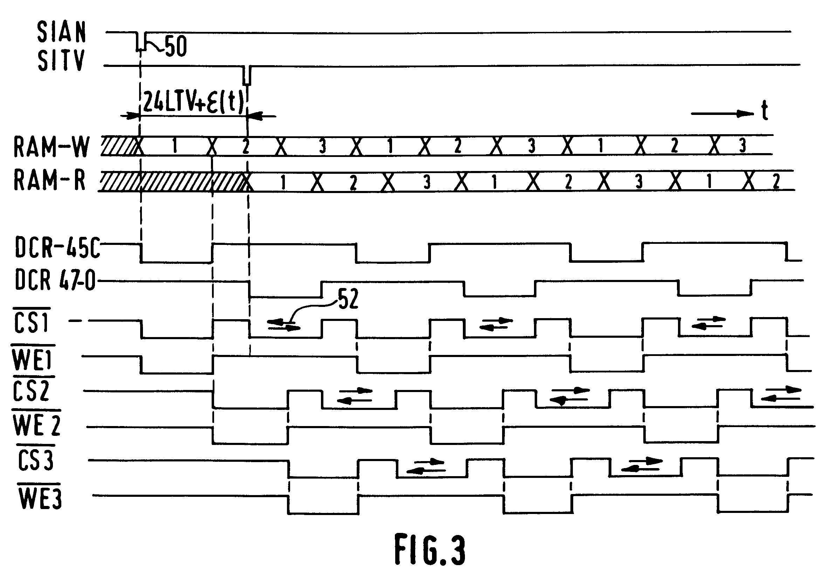

Pour faire fonctionner la mémoire de ligne de la figure 2 une logique permettant la génération des signaux de sélection de circuit $\overline{CS1}$, $\overline{CS2}$, $\overline{CS3}$ et des signaux de lecture-écriture $\overline{WE1}$, $\overline{WE2}$, $\overline{WE3}$ est aussi nécessaire. Comme pour la génération des adresses, les six signaux logiques cités en dernier lieu sont engendrés à partir des signaux de synchronisation SLAN et SIAN. A cet effet, le circuit de la figure 2 comporte d'une part un compteur dit compteur logique d'analyse 44 et un décodeur logique d'analyse 45, d'autre part un compteur logique TV 46 et un décodeur logique TV 47. Les éléments 44 et 46 sont des compteurs à 2 bits incrémentés par le bit de sortie de poids le plus élevé du conducteur quadruple 37 (respectivement 41) et initialisés par les impulsions du signal SIAN (respectivement SITV). Les compteurs 44 et 46 sont montés en diviseurs à trois états de façon telle que les décodeurs 45 et 47 qui reçoivent leur signal de sortie sur un conducteur double fournissent sur leurs trois premières sorties référencées 0,1,2, les signaux représentés à la figure 3. Par exemple en ce qui concerne le décodeur logique 45, les sorties 0,1,2 engendrent respectivement les signaux $\overline{WE1}$, $\overline{WE2}$, $\overline{WE3}$. Le signal $\overline{CS1}$ - (respectivement $\overline{CS2}$, $\overline{CS3}$) est obtenu à la sortie d'un circuit-porte ET 48 (respectivement 49, 51) dont les entrées sont reliées aux sorties 0 (respectivement 1, 2) des décodeurs logiques 45 et 47. On notera que les signaux de sortie des décodeurs 45 et 47 sont identiques quant à leur période égale à 3H temps de ligne et à leur rapport cyclique égal à 0,33. Les trois signaux de sortie d'un même décodeur sont déphasés entre eux de N ou 2N temps de ligne.

La figure 3 est un exemple de la forme en fonction du temps de certains signaux et de certaines séquences du circuit de la figure 2. On y a représenté les signaux SIAN et SITV qui présentent entre eux un déphasage noté : 24 LTV + $\epsilon$(t), soit un déphasage nominal de 24 temps de ligne TV plus le déphasage parasite $\epsilon$(t) dont l'invention permet la correction. Sur la figure 3, on a choisi le cas particulier : $\epsilon$(t) = 0. Les séquences RAM-W et RAM-R indiquent l'ordre d'inscription, respectivement de lecture, des blocs mémoires RAM 25, 26 et 27. On notera qu'un décalage avance ou retard de l'impulsion 50 du signal SIAN ne dépassant pas 8 temps de ligne, ce qui est indiqué symboliquement par les flèches inversées 52, permet à la lecture ou à l'inscription des blocs-mémoires de s'effectuer sans recouvrement, ce qui peut être obtenu sous la commande des signaux $\overline{CS1}$, $\overline{WE1}$, $\overline{CS2}$, $\overline{WE2}$, $\overline{CS3}$, $\overline{WE3}$. Par exemple les signaux $\overline{CS1}$ et $\overline{WE1}$ sont obtenus à partir des signaux DCR45-0 (sortie 0 du décodeur 45) et DCR47-0 (sortie 0 du décodeur 47) : le signal $\overline{WE1}$ s'identifie au signal DCR45-0 et le signal $\overline{CS1}$ s'obtient par ailleurs à partir de la fonction logique :

$$(DCR45\text{-}0).(DCR47\text{-}0) = \overline{CS1}$$

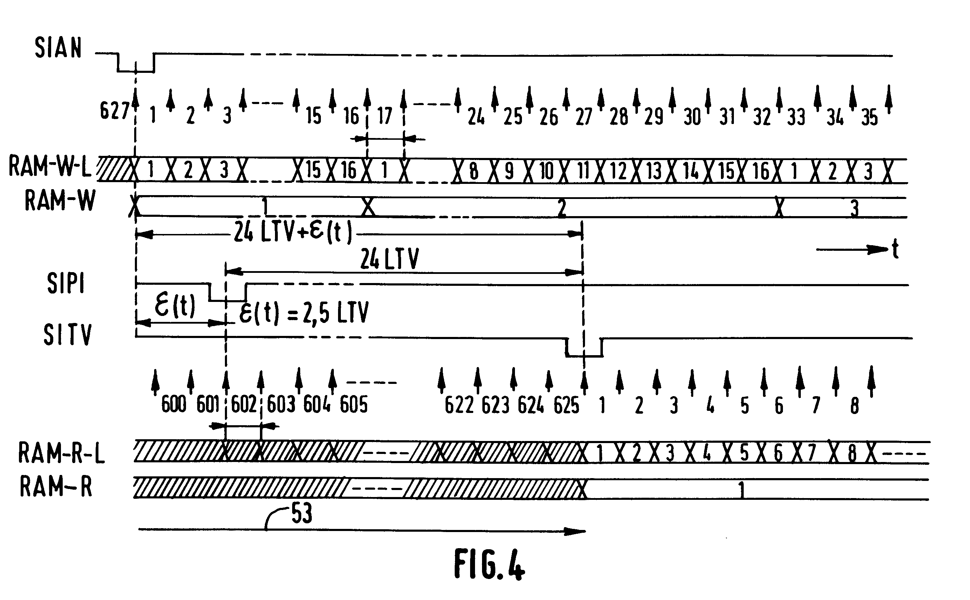

La figure 4 représente, à plus grande échelle qu'à la figure 3 et avec des contractions de temps, des diagrammes de temps permettant d'expliciter le fonctionnement du premier mode de réalisation de l'invention. Sur la figure 4 on a encore représenté les signaux SIAN et SITV avec un déphasage mutuel de 24 temps de ligne TV plus 2,5 temps de ligne TV ($\epsilon$(t) = 2,5 LTV). Le signal SIPI est le signal de synchronisation d'image pilote sur le conducteur 19, voir figure 1. On a aussi représenté les séquences RAM-W et RAM-R avec les séquences de lignes correspondantes RAM-W-L et RAM-R-L. Au-dessus de la séquence RAM-W-L figure la séquence d'écriture des lignes d'analyse comptées à partir du début de l'image analysée, soit de 1 à 627. De même, au début de la séquence RAM-R-L figure la séquence de lecture des lignes TV comptées à partir du début de l'image TV, soit de 1 à 625. Une flèche 53 indique, pour les séquences RAM-R et RAM-R-L, l'absence de lecture pendant le retour trame (ou image TV).

Etant donnée l'impossibilité de lire et d'inscrire simultanément une mémoire RAM, une autre idée de départ, pour la réalisation de la mémoire de lignes 11 consiste à envisager l'écriture et la lecture des points, par paquets successifs de points consécutifs, chaque paquet contenant le même nombre q de points (sauf éventuellement le dernier paquet de chaque ligne qui peut en contenir entre 1 et q), le nombre q étant de préférence un multiple de 2 et de préférence égal à 8. Ceci implique une mise sous forme parallèle q bits par q bits des bits qui apparaissent en série sur chacun des p conducteurs appartenant au conducteur multiple 13, voir figure 1, cette mise sous forme parallèle s'effectuant dans un convertisseur d'entrée de la mémoire de lignes 11. Après mise en mémoire et, ultérieurement c'est-à-dire plusieurs temps de ligne plus tard, lecture d'un paquet donné de q points dans le même bloc mémoire, ce paquet est transformé de sa forme parallèle en la forme série à la fréquence TV des points par un convertisseur de sortie de la mémoire de lignes 11. La conversion sous forme parallèle des points est rendue nécessaire par la fréquence élevée $F_{pTV}$, par exemple égale à 15 MHz soit un temps de point de 66,6 ns, ce temps étant comparable aux temps d'accès des mémoires RAM couramment utilisées. On notera que pour des mémoires RAM plus rapides et/ou des temps de points plus grands, la mise sous forme parallèle des points ne serait plus nécessaire.

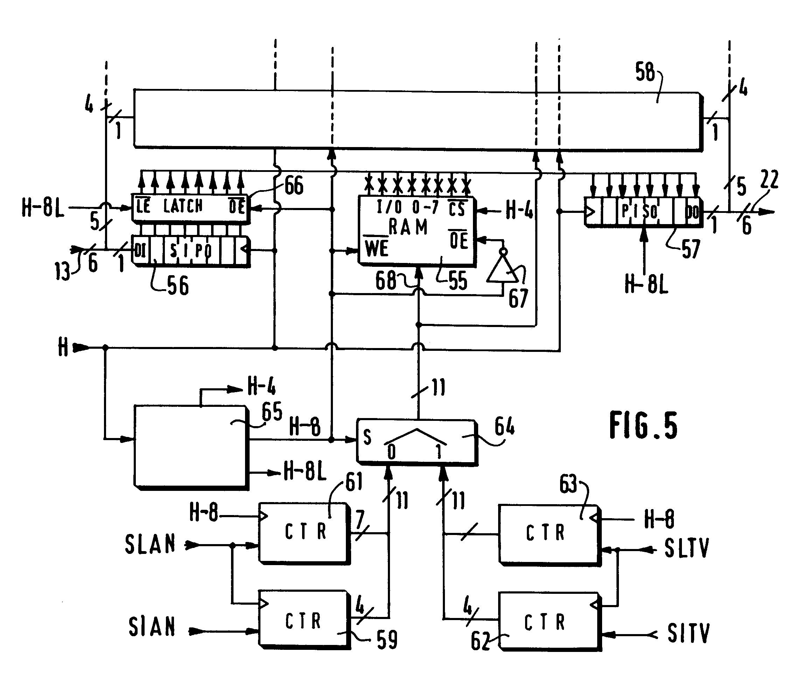

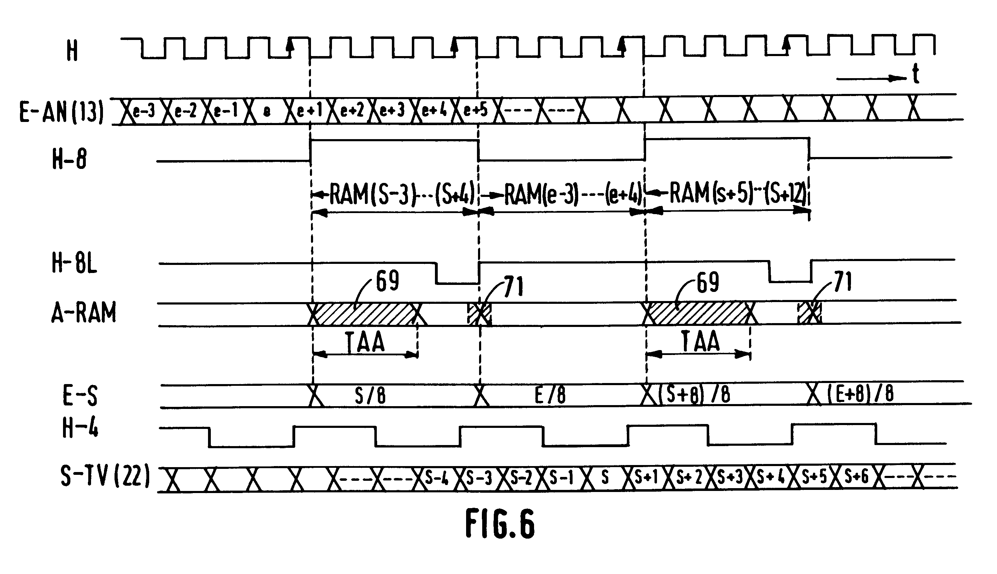

Avec la technique indiquée au paragraphe précédent, un ensemble de mémoires RAM totalisant la capacité de N lignes d'image est suffisante. Cet ensemble est constitué de p blocs de 2 K octets, à raison d'un bloc par bit d'échantillonnage des points d'un rang donné. Sur la figure 5 on a représenté un seul des 6 blocs mémoires RAM, référencé 55 et muni d'un convertisseur d'entrée 56 et d'un convertisseur de sortie 57 : ces trois éléments constituant un premier sous ensemble. La mémoire d'image 11 comporte p-1 (soit 5) autres sous ensembles, identiques au premier dont l'un (seul représenté), est symbolisé par le rectangle 58, et qui reçoivent les mêmes signaux de commande et d'adressage que le premier, seules les entrées et les sorties de données, sur un conducteur pour chaque sous ensemble étant différentes. A la partie inférieure de la figure 5 sont représentés des compteurs 59 et 61 destinés à l'adressage en écriture des lignes d'image analysée et des paquets de q points d'analyse respectivement des compteurs 62 et 63 pour l'adressage en lecture des lignes d'image TV et des paquets de q points TV respectivement. Un multiplexeur 64 reçoit 11 premiers signaux en provenance des compteurs 59 et 61 d'une part et 11 deuxièmes signaux en provenance des compteurs 62 et 63 d'autre part. Un générateur d'horloges de base 65 reçoit le signal H de synchronisation des points à la fréquence du standard TV pour les points (signal carré) et fournit à sa sortie les signaux H-4, H-8 et H-8L représentés, ainsi que le signal H à la figure 6. Le signal H-4 (respectivement le signal H-8) est un signal carré, de période quadruple (respectivement octuple) de celle du signal H, le signal H-4 présentant une légère avance par rapport au signal H-8. Le signal H-8L a la même fréquence que le signal H-8, est en opposition de phase avec ce dernier et son rapport cyclique est égal à 1/8. Un cycle d'écriture-lecture s'effectue en huit temps de points, ce qui est en concordance avec le temps nécessaire pour remplir le convertisseur 56, respectivement vider le convertisseur 57. Le convertisseur 56 à entrée série et sortie parallèle (SIPO) reçoit le bit de données DI qui se propage vers la droite au rythme des points sous la commande du signal H sur son entrée d'horloge. Le convertisseur SIPO 56 est par exemple un HC 595 muni d'un verrou d'entrée 66. Lorsque le SIPO est rempli, son contenu est transféré en moins d'un temps de point dans le verrou (latch) 66 sous la commande du signal H-8L à l'état logique "0" sur une entrée $\overline{LE}$ ("Latch Enable" en langue anglaise), alors que la sortie du latch est inhibée par le signal H-8 à l'état "1" sur une entrée $\overline{OE}$ ("Output Enable" en langue anglaise). L'information contenue dans le latch 66 va être inscrite dans le bloc mémoire 55 pendant les quatre temps de point qui suivent. A cet effet, le signal H-8 sur l'entrée d'écriture-lecture $\overline{WE}$ de la mémoire 55 passe à l'état "0" et simultanément, l'entrée $\overline{OE}$ qui reçoit le signal H-8 transformé en $\overline{H\text{-}8}$ par l'inverseur 67 est inhibée. Par ailleurs, pour permettre une commutation correcte des adresses en écriture, l'entrée de sélection de circuit $\overline{CS}$ reçoit le signal H-4 qui doit être à l'état "1" lors de la transition négative du signal H-8. Pour cela, un temps d'établissement de l'ordre de quelques dizaines de nanosecondes correspondant à une légère avance du signal H-4 est respecté. On notera que la commande extérieure de l'entrée $\overline{CS}$ est utile ici pour réduire, environ de moitié, la consommation de la mémoire. Pour l'inscription de la mémoire 55, le multiplexeur 64 sélectionne les 4 signaux de sortie du compteur 59 plus les 7 sorties du compteur 61 sous la commande du signal H-8 à l'état "0" à son entrée S. Comme pour le compteur 38 de la figure 2, le compteur de lignes d'analyse 59 est initialisé par les impulsions du signal SIAN et incrémenté par les impulsions du signal SLAN. De façon analogue, le compteur de paquets de huit points 61 est initialisé par les impulsions du signal SLAN et incrémenté par les impulsions du signal H-8. Les adresses d'écriture sur l'entrée d'adresses 68 de chaque bloc RAM 55 se succèdent ainsi pour les paquets de 8 points d'analyse selon la même suite chronologique que la suite spatiale correcte des points des lignes d'analyse.

Lorsque, ensuite, le signal H-4 passe à "0" sur l'entrée $\overline{CS}$ de la mémoire, l'entrée $\overline{OE}$ du latch 66 étant le siège de l'état "0", l'information contenue dans le latch est transférée à l'emplacement mémoire adressé par l'entrée 68 de la mémoire et, après deux temps de point, le signal H-4 repasse à l'état "1", ce qui bloque à nouveau la mémoire en écriture et en lecture. Environ 30 ns après, le signal H-8 passe aussi à l'état "1", ce qui prépositionne la mémoire 55 et le multiplexeur 64 en lecture pour les 4 temps de point qui suivent. Ce temps préalable à la lecture est déterminé suffisamment élevé pour que soit respecté le temps d'accès d'adressage en lecture TAA. La durée TAA est de l'ordre de 2 à 3 temps de point et on peut utiliser par exemple des mémoires RAM 2K x 8 statiques CMOS à 120 ns de temps d'accès. L'adressage en lecture s'effectue de la même façon que ce qui est décrit ci-dessus pour l'écriture, en substituant aux compteurs 59 et 61 les compteurs 62 et 63 et aux signaux SIAN et SLAN les signaux SITV et SLTV. Le comptage des paquets de points se fait aussi sous la commande du signal H-8 sur l'entrée d'incrémentation du compteur 63. Pendant l'écoulement de la durée TAA le signal H-4 repasse à l'état "0" puis, après la fin de la durée TAA, le signal H-8L passe aussi à l'état "0", sur l'entrée de chargement du convertisseur de sortie PISO 57. L'information désignée par l'adressage sur le conducteur 68 est alors transmise en parallèle en moins d'un temps de point de son emplacement mémoire en 55 dans le convertisseur PISO 57 qui, pendant ce temps, finissait de se vider de son information antérieure (s + 4) sur le conducteur de sortie 22. Le convertisseur 57 est par exemple du type PISO HC 166. On notera que, pendant ce même temps de point, le latch 66 reçoit un nouveau paquet de 8 bits d'information de 8 points successifs. Puis le cycle d'écriture et de lecture recommence.

Sur la figure 6, on a représenté une séquence de points à inscrire, notée E-AN et constituée de points : e ± i ainsi qu'une séquence de points à lire, notée S-TV et constituée de points à lire s + j. Pour trois demi-périodes du signal H-8 sont indiqués les p paquets de huit bits à inscrire (→ RAM) ou à lire (← RAM) en alternance. Ce fonctionnement alterné est aussi représenté par la séquence E-S où l'on a représenté les paquets de 8 points à lire et à inscrire respectivement sous la forme : S/8, E/8, (S + 8)/8, (E + 8)/8,... Sur la figure 6 est aussi représentée une séquence A-RAM où figurent selon des zones hachurées les temps d'établissement des données des p mémoires RAM, les zones 69 pour la lecture, de durée TAA, et les zones 71 pour l'écriture, de durée nettement inférieure à TAA.

La figure 7 est un deuxième diagramme de temps, à l'échelle des temps de ligne, homologue de celui de la figure 4, permettant d'expliciter le fonctionnement du circuit selon la figure 5. Comme à la figure 4, on a représenté les signaux SIAN et SITV mais avec un déphasage mutuel de 8 temps de ligne TV moins un temps de ligne TV ($\epsilon'(t)$ = -1 LTV). Dans ce deuxième mode de réalisation le déphasage nominal, entre les signaux de synchronisation d'image TV et le signal de synchronisation d'image pilote SIPI, est réduit au tiers de ce qu il est pour le premier mode, au même titre que la capacité de mémoire nécessaire. Les signaux SLAN et SLTV qui sont par exemple des signaux carrés, actifs par leurs fronts montants, sont représentés avec, en regard, les séquences de lignes correspondantes, RAM-W'-L pour l'écriture des lignes d'analyse et RAM-R'-L pour la lecture des lignes TV.

L'invention n'est pas strictement limitée aux exemples de réalisation décrits ci-dessus. Tout en restant conforme à la technique du deuxième mode de réalisation notamment, il est possible d'utiliser des bytes dont le nombre de bits est différent de l'octet. L'utilisation de quartets par exemple conduirait à des mémoires de 4K x 4 bits qui devraient travailler deux fois plus vite, la fréquence du cycle d'écriture-lecture étant alors doublée : la capacité des convertisseurs d'entrée et de sortie serait réduite de moitié et les compteurs de points 61 et 63 devraient comporter huit bits de sortie au lieu de 7. Pour des fréquences de points supérieures à 30 MHz il faudrait, à l'opposé, envisager des blocs de mémoires RAM organisés en 1K x 16 bits, lorsque ces dernières existeront sur le marché. Pour les deux modes de réalisation décrits ci-dessus, on peut envisager des fréquences de points $F_{pA}$ et $F_{pTV}$ différentes, contrairement à ce qu'indique la figure 1. Pour que le dispositif décrit ci-dessus fonctionne correctement, il faudrait alors introduire dans la chaîne de traitement, entre les éléments 2 et 11 et au niveau du conducteur 13 une mémoire du type FIFO (non représentée) ayant une capacité d'une ligne d'image et qui reçoive les points à la fréquence $F_{pA}$ et les fournisse à la fréquence $F_{pTV}$.

**Revendications**

1. Dispositif pour assurer la compatibilité télévision de senseurs d'image à analyse optico-mécanique, ladite analyse étant effectuée par l'analyseur d'une caméra utilisant un balayage série ou parallèle-série d'un champ d'observation, comportant d'une part un dispositif de numérisation qui fournit en série sous forme numérique des échantillons représentatifs des points du champ d'observation analysé dans l'ordre chronologique, chaque point échantillon étant codé sur p bits en parallèle et un convertisseur numérique-analogique, d'autre part des moyens de visualisation sur un moniteur de télévision (moniteur TV) du signal de sortie dudit convertisseur numérique analoqique, caractérisé en ce qu'il comporte en outre en combinaison d'une part entre ledit dispositif de numérisation et ledit convertisseur numérique-analogique une mémoire de lignes comportant au moins N lignes, N étant un nombre entier, et conçue pour recevoir des points de l'image du champ d'observation à une première cadence de lignes et de points d'analyse optico-mécanique et pour fournir ces points audit moniteur TV à une deuxième cadence de lignes TV quelles que soient les fluctuations, variables dans le temps, entre ces cadences respectives, fluctuations telles que le décalage instantané entre l'analyse et la restitution sur le moniteur TV varie au maximum de N lignes, et d'autre part un générateur d'horloge d'image qui fournit d'une part audit analyseur et à ladite mémoire de lignes des signaux de synchronisation d'image de même fréquence, d'autre part à ladite mémoire de lignes des signaux de synchronisation de ligne et de point à un standard TV.

2.  Dispositif pour assurer la compatibilité télévision selon la revendication 1, caractérisé en ce que ladite mémoire de lignes est une mémoire RAM dite à accès aléatoire.

3.  Dispositif pour assurer la compatibilité télévision selon la revendication 2, caractérisé en ce que ladite mémoire de ligne est constituée de P blocs de X lignes, P et X étant des nombres entiers tels que :

$$(P-3)X < N \leq (P-2)X$$

avec :
    $X \leq N$ et $P \geq 3$.

4.  Dispositif pour assurer la compatibilité télévision comportant un registre d'entrée des points d'analyse et un registre de sortie des points au standard TV, selon la revendication 3, caractérisé en ce que X = N et P = 3, et qu'il comporte en outre pour l'adressage de ladite mémoire RAM des compteurs de lignes et de points d'analyse, et un compteur de N lignes d'analyse relié à un premier décodeur d'analyse, des compteurs de lignes et de points d'image TV, et un compteur de N lignes TV relié à un deuxième décodeur TV, un circuit logique pour fournir, à partir desdits premier et deuxième décodeurs des signaux de commande d'écriture-lecture et de sélection de circuit auxdits P blocs de mémoire de ligne, et des multiplexeurs commandés par lesdits signaux d'écriture-lecture pour transmettre auxdits P blocs les adresses constituées par les signaux de sortie d'au moins lesdits compteurs de ligne.

5.  Dispositif pour assurer la compatibilité télévision selon la revendication 4, caractérisé en ce que lesdits compteurs de points d'analyse et d'image TV sont confondus, à raison d'un compteur par bloc de mémoires de lignes, soit P compteurs, disposé chacun entre ledit bloc et un multiplexeur associé audit bloc.

6.  Dispositif pour assurer la compatibilité télévision selon la revendication 2, caractérisé en ce qu'il comporte une mémoire de lignes à accès aléatoire réduite à N lignes et distribuée sous forme de p blocs, un registre d'entrée de points d'analyse constitué par p convertisseurs série-parallèle, à raison d'un convertisseur par bit de point d'analyse, dont la capacité est égale à q bits, q étant une puissance de deux, un registre de sortie de points au standard TV constitué par p convertisseurs parallèle-série ayant chacun une capacité de q bits, un bloc mémoire dont la capacité comptée en nombre de lignes est égale à N/p étant raccordé à chaque registre d'entrée et de sortie, un compteur de points d'analyse, respectivement de points TV, et un compteur de lignes d'analyse, respectivement de lignes TV, lesdits compteurs fournissant à leur sortie multiple, par l'intermédiaire d'un multiplexeur, les signaux d'adresse d'écriture, respectivement de lecture à chacun des p blocs mémoires, et un générateur d'horloges de base qui fournit auxdits registres, blocs-mémoires, multiplexeurs et compteur de lignes les signaux de commande adéquats.

7.  Dispositif pour assurer la compatibilité télévision selon l'une des revendications 1 à 6, caractérisé en ce que les cadences de points en sortie dudit dispositif de numérisation, en entrée dudit moniteur TV et en entrée et sortie de ladite mémoire de ligne sont égales à la cadence des points TV.

**Claims**

1.  A device for ensuring the television compatibility of opto-mechanical analysis image sensors, said analysis being effected by the analyser of a camera using a series or parallel-series scanning of a field of view, comprising a digitizing device which serially supplies in digital form samples which are representative of elements of the field of view analysed in a chronological sequence, each sampled element being coded in p bits in parallel and a digital-to-analog converter, and also to display means in a television monitor (TV monitor) of the output signal of said digital-to-analog converter, characterized in that it further includes a combination of, on the one hand, arranged between said digitizing device and said digital-toanalog converter a line memory containing at least N lines, N being an integer, and designed to receive the picture elements of the field of view at a first line and opto-mechanical analysis element rate and to supply these elements to said TY monitor at a second TV line rate irrespective of the fluctuations, which vary *versus* time, between these respective rates, these fluctuations being such that the instantaneous shift between the analysis and the recovery on the TV monitor varies with a maximum of N lines, and on the other hand a picture clock generator which applies picture synchronising signals of the same frequency to said analyser and to said line memory and also line and element synchronising signals at a TV standard to said line memory.

2. A device for ensuring the television compatibility as claimed in Claim 1, characterized in that said line memory is a RAM memory (random-access memory).

3. A device for ensuring the television compatibility as claimed in Claim 2, characterized in that said line memory is constituted by P blocks of X lines, P and X being integers such that:

$$(P-3)X < N \leq (P-2)X$$

wherein:
$X \leq N$ and $P \geq 3$.

4. A device for ensuring the television compatibility including an input register for the analysis elements and an output register for the elements of the TV standard, as claimed in Claim 3, characterized in that $X = N$ and $P = 3$, and that it further includes line and analysis element counters for addressing said RAM memory and a counter for counting N analysis lines connected to a first analysis decoder, TV line and picture element counters, and a counter counting N TV lines which isconnected to a second TV decoder, a logic circuit for applying, on the basis of said first and second decoders, write-read and circuit selection control signals to said P line memory blocks and multiplexers which are controlled by said write-read signals for transferring to said P blocks the addresses constituted by the output signals of at least said line counters.

5. A device for ensuring the television compatibility as claimed in Claim 4, characterized in that said analysis element and TV picture counters coincide, one counter for each block of line memories, *i.e. P* counters which are each arranged between said block and a multiplexer associated with said block.

6. A device for ensuring the television compatibility as claimed in Claim 2, characterized in that it includes a random-access line memory reduced to N lines and distributed over p blocks, an analysis element input register formed by p series-parallel converters, at the rate of one converter per analysis element bit, whose capacity is equal to q bits, q being a power of two, an element output register at the TV standard formed by p parallel-series converters each having a capacity of q bits, a memory block whose capacity expressed in the number of lines is equal to N/p being connected to each input and output register, an analysis element and TV element counter, respectively, and a counter for the analysis lines and the TV lines, respectively, said counters applying from their multiple output *via* a multiplexer, the write address signals and read address signals, respectively, to each one of the p memory blocks, and a basic clock pulse generator which applies the appropriate control signals to said registers, memory blocks, multiplexers and line counter.

7. A device for ensuring the television compatibility as claimed in any one of the Claims 1 to 6, characterized in that the rates of the elements at the output of said digitizing device, at the input of said TV monitor and at the input and output of said line memory are equal to the TV element rate.

**Patentansprüche**

1. Anordnung zur Gewährleistung der Fernsehkompatibilität von Bildsensoren mit optomechanischer Analyse, wobei letztere mit Hilfe des Analysators einer Kamera unter Verwendung serieller oder parallel-serieller Abtastung eines Betrachtungsfeldes ausgeführt wird, mit einerseits einer Digitalisieranordnung, die seriell digitale, das analysierte Betrachtungsfeld repräsentierende Abtastwerte in chronologischer Reihenfolge liefert, wobei jeder Abtastpunkt mit p Bits parallel codiert ist, und einem Digital-Analog-Umsetzer und andererseits mit Mitteln zur Wiedergabe des Ausgangssignals des Digital-Analog-Umsetzers auf einem Fernsehbildschirm (Fernsehmonitor), dadurch gekennzeichnet, daß sie außerdem als Kombination einerseits einen sich zwischen der genannten Digitalisieranordnung und dem Umsetzer befindlichen Zeilenspeicher mit mindestens N Zeilen enthält, wobei N ganzzahlig ist, der die Bildpunkte des Betrachtungsfeldes bei einer ersten Zeilenabtastrate und Punkte der optomechanischen Analyse empfangen und diese Punkte an den genannten Fernsehmonitor bei einer zweiten Fernsehzeilenabtastrate liefern soll, ungeachtet der in der Zeit veränderlichen Schwankungen zwischen diesen jeweiligen Abtastraten, wobei die Schwankungen so sind, daß die momentane Verschiebung zwischen der Analyse und der Wiedergabe auf dem Fernsehmonitor um maximal N Zeilen schwankt, und andererseits einen Bildtaktgeber, der einerseits dem Analysator und dem Zeilenspeicher Bildsynchronisationssignale der gleichen Frequenz und andererseits dem Zeilenspeicher Zeilen- und Punktsynchronisationssignale gemäß einer Fernsehnorm liefert.

2. Anordnung zur Gewährleistung der Fernsehkompatibilität nach Anspruch 1, dadurch gekennzeichnet, daß der Zeilenspeicher ein RAM-Speicher, d.h. ein Speicher mit wahlfreiem Zugriff ist.

3. Anordnung zur Gewährleistung der Fernsehkompatibilität nach Anspruch 2, dadurch gekennzeichnet, daß der Zeilenspeicher aus P Blöcken von X Zeilen besteht, wobei P und X ganze Zahlen sind, so daß:

$$(P-3)X < N \leq (P-2)X$$

mit:

$X \leq N$ und $P \geq 3$.

4. Anordnung zur Gewährleistung der Fernsehkompatibilität mit einem Eingangsregister für die Analysepunkte und einem Ausgangsregister für Punkte gemäß der Fernsehnorm nach Anspruch 3, dadurch gekennzeichnet, daß X = N und P = 3 und daß sie auch Zeilenzähler und Analysepunktezähler zur Adressierung des RAM-Speichers aufweist und einen mit einem ersten Analysedecoder verbundenen Zähler von N Analysezeilen, Zeilenzähler und Fernsehbildpunktezähler, und einen mit einem zweiten Fernsehdecoder verbundenen Zähler von N Fernsehzeilen, eine Logikschaltung, um, ausgehend von den ersten und zweiten Decodern, Lese-Schreibbefehlsignale und Schaltungsselektionssignale an die P Blöcke des Zeilenspeichers zu liefern, und von den Lese-Schreib-Signalen gesteuerte Multiplexer zur Übertragung der von den Ausgangssignalen mindestens der Zeilenzähler gebildeten Adressen an die P Blöcke.

5. Anordnung zur Gewährleistung der Fernsehkompatibilität nach Anspruch 4, dadurch gekennzeichnet, daß die Analysepunktezähler und die Fernsehbildpunktezähler zusammenfallen, mit einem Zähler pro Zeilenspeicherblock, d.h. P Zähler, die jeweils zwischen dem Block und einem mit dem Block verknüpften Multiplexer angeordnet sind.

6. Anordnung zur Gewährleistung der Fernsehkompatibilität nach Anspruch 2, dadurch gekennzeichnet, daß sie einen auf N Zeilen reduzierten und auf p Blöcke verteilten Zeilenspeicher mit wahlfreiem Zugriff hat, ein Analysepunkt-Eingangsregister, das von p Serien-Parallel-Wandlern gebildet wird, mit einem Wandler pro Analysepunktbit, dessen Kapazität gleich q Bits ist, wobei q eine Zweierpotenz ist, ein Ausgangsregister von Punkten der Fernsehnorm, das von p Parallel-Serien-Wandlern mit je einer Kapazität von q Bits gebildet wird, einen Speicherblock, dessen Kapazität in Zeilen gerechnet gleich N/p ist und der mit jedem Eingangs- und Ausgangsregister verbunden ist, einen Analysepunkte- bzw. Fernsehpunktezähler und einen Analysezeilen- bzw. Fernsehzeilenzähler, wobei die Zähler an ihrem Mehrfachausgang, mittels eines Multiplexers, die Schreibadressensignale bzw. Leseadressensignale für jeden der p Speicherblökke liefern und einen Basistaktgenerator, der an die genannten Register, Speicherblöcke, Multiplexer und Zeilenzähler entsprechende Steuersignale liefert.

7. Anordnung zur Gewährleistung der Fernsehkompatibilität nach einem der Ansprüche 1 bis 6, dadurch gekennzeichnet, daß die Abtastraten der Punkte am Ausgang der Digitalisieranordnung, am Eingang des Fernsehmonitors und am Eingang und Ausgang des Zeilenspeichers gleich der Abtastrate der Fernsehpunkte sind.

EP 0 287 172 B1

FIG.1

FIG.7

FIG.2

EP 0 287 172 B1

FIG.3

FIG.4

EP 0 287 172 B1

FIG.5

EP 0 287 172 B1

FIG.6